Europäisches Patentamt

European Patent Office

Office européen des brevets

(19)

(11) Publication number: **0 064 557**
**B1**

(12) **EUROPEAN PATENT SPECIFICATION**

(45) Date of publication of patent specification: **21.09.88**

(51) Int. Cl.⁴: **H 04 N 1/17, H 04 N 1/40**

(21) Application number: **81903064.4**

(22) Date of filing: **11.11.81**

(86) International application number:
**PCT/JP81/00329**

(87) International publication number:
**WO 82/01798 27.05.82 Gazette 82/14**

(54) **Picture signal reading method.**

(30) Priority: **17.11.80 JP 161740/80**

(43) Date of publication of application:
**17.11.82 Bulletin 82/46**

(45) Publication of the grant of the patent:
**21.09.88 Bulletin 88/38**

(84) Designated Contracting States:
**DE FR GB**

(56) References cited:
**JP-A-50 050 810**
**JP-A-52 151 513**
**JP-A-53 041 920**
**JP-A-53 118 917**
**US-A-3 919 464**
**US-A-3 947 627**
**US-A-3 950 609**
**US-A-4 217 611**

**PATENTS ABSTRACTS OF JAPAN, vol. 4, no.
170 (E-35)652r, 22nd November 1980; & JP - A -
55 118 272 (MITSUBISHI DENKI K.K.) 11-09-
1980**

(73) Proprietor: **FUJITSU LIMITED**
**1015, Kamikodanaka Nakahara-ku
Kawasaki-shi Kanagawa 211 (JP)**

(72) Inventor: **AMEMIYA, Takeshi
3-35-15-113, Kugayama Suginami-ku
Tokyo 168 (JP)**

(74) Representative: **Muir, Ian R. et al
HASELTINE LAKE & CO. Hazlitt House 28
Southampton Buildings Chancery Lane
London WC2A 1AT (GB)**

**Description**

The present invention relates to reading picture signals, for example in facisimile equipment.

Furthermore, it relates to reading of picture signals in such a way that picture data can be read while a manuscript is being shifted.

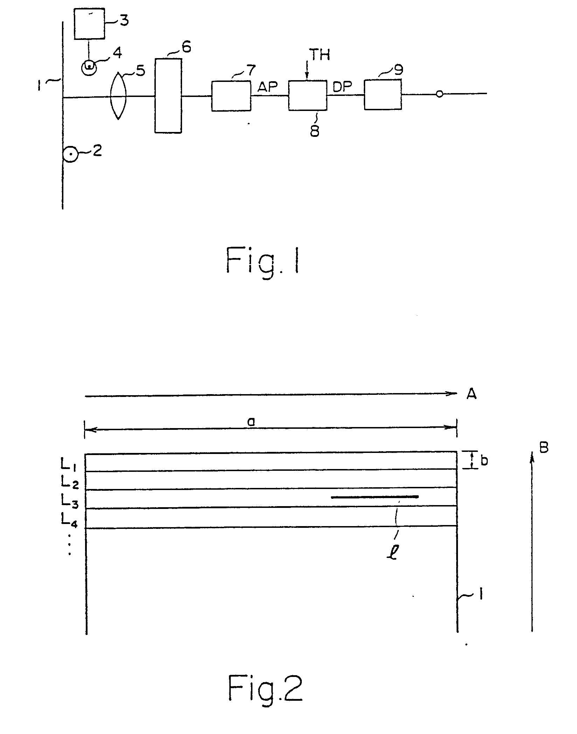

Fig. 1 outlines an example of an existing facsimile transmitter. In Fig. 1, picture data of a manuscript 1 which is irradiated by a lighting source 4 having a power supply 3 and fed by a roller 2 is read for a line by a CCD (Charge Coupled Device) image sensor (photoelectric conversion element) 6 via a lens 5, amplified by an amplifier 7 after photo-electric conversion and then input to a discriminator 8 as an analog picture signal AP. The discriminator circuit 8 compares the received analog picture signal AP with a discrimination level signal TH for discriminating black and white levels, and outputs a digital picture signal DP of logic "1" value when the analog picture signal AP is greater than the discrimination level signal TH (a white signal W) and a digital picture signal DP of logic "0" value when the analog picture signal AP is less than the discrimination level signal TH (a black signal B). The digital picture signal DP output from the discrimination circuit 8 is input to a picture signal processor 9 and then transmitted to a transmission path via a modulator.

Such facsimile equipment is provided with means enabling the transmission of picture data relating to a blank portion of the manuscript to be omitted, with a view to improving transmission rate.

Namely, picture data for a line is read by the image sensor 6 indicated in Fig. 1, and this one-line length is divided into a predetermined number of blocks and it is discriminated whether or not a black signal B exists in each block. A block not including a black signal B is not transmitted as a picture signal: only when a black signal B is present is a block transmitted as a picture signal.

This has the advantage that a picture signal relating to a blank portion is not transmitted so that transmission time can be curtailed and thereby send time can also be shortened.

However, this has the following disadvantages.

Namely, the image sensor 6 indicated in Fig. 1 cannot read picture data instantaneously: a predetermined period of time is required for reading. The time at which reading of picture data relating to a next line is to start is specified by the time of sending of the picture data relating to the preceding line to the transmission path. This is because when the preceding line data is transmitted, it is immediately required to transfer the data read by the image sensor 6 and the read time of the image sensor 6 is constant.

When reading picture data using image sensor 6, the manuscript paper is fed by the width of one scanning line from the preceding line by the roller 2 and when the manuscript stops, data is read. However, if the time required for sending data of the preceding line is contracted, as explained above, a situation may sometimes arise which requires the image sensor 6 to commence reading of picture data at a time when paper feeding is taking place. Particularly, when the preceding line is all white, the time required for sending picture data for that preceding line to the transmission path is short and a situation may arise in which it is impossible for the image sensor 6 to read accurately the picture data of the next line of the manuscript having been fed.

This is explained with reference to Fig. 2. Fig. 2 illustrates main scanning and subscanning of manuscript 1 of Fig. 1. As shown in Fig. 2, main scanning is carried out in a direction indicated by arrow A and the image sensor reads scanning line picture data in this direction. The scanning lines $L_1$, $L_2$, $L_3$, ... are read in the indicated sequence. The arrow B indicates a subscanning direction: each paper feed moves the paper by a distance b in the subscanning direction. Therefore, the image sensor reads picture data corresponding to an area ab, formed by length a of a main scanning and by width b, as the picture data of each line.

When the transmission time for picture data relating to a blank picture portion is curtailed as explained above, send time can be also curtailed. Picture data relating to line L2 is read during the period of send processing in relation to the picture data of line $L_1$. Moreover, for reading picture data of line $L_2$, the manuscript 1 is moved simultaneously with the start of send processing for line $L_1$.

This means that it is required, for reading picture data of the line $L_2$, to move the line $L_2$ to the position of a image sensor by a subscanning feed movement of the manuscript and to read picture data of line $L_2$ during a period T corresponding to the duration, from start to end, of send processing for line $L_1$.

In such a case, the sum of times required for the subscanning paper feed and for reading of picture data by the image sensor 6 may become longer than the period T. In view of this, data reading by image sensor 6 may be started simultaneously with the start of the subscanning feed movement. For example, picture data of line $L_3$ is read during the period of sending of picture data of line $L_2$ as the above-mentioned read condition. In this case, the sending processing period is short since the line $L_2$ is all white. Therefore, reading of data by image sensor 6 is started simultaneously with the subscanning feed. At this time, the image sensor 6 reads picture data relating to line $L_3$, including black picture data I.

However, since reading of data is carried out during subscanning feed, the read area becomes wider than the area ab mentioned above and may become 2ab (line $L_2$ and line $L_3$) in a worst case. In such a case, the "black" picture data indicated by I in the line $L_3$ may be subject to a discrimination error because a difference in amounts of charges corresponding to the "black" and "white" picture data among those to be stored in the image sensor 6 becomes small since the "black" picture data occupies relatively a smaller proportion in the data read area, and as a result the "black" picture data corresponding to I in Fig. 2 cannot be transmitted.

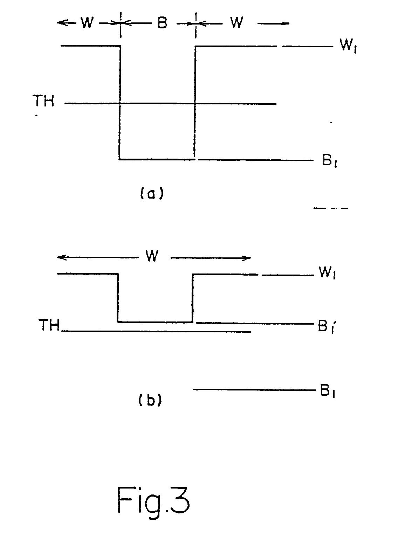

This is explained with reference to Figs. 3(a) and (b). Fig. 3 indicates an output of the image sensor 6.

In the case of an ordinary output, as shown in Fig. 3(a), there is sufficient signal level difference between the white picture data $W_1$ and the black picture data $B_1$ and as a result the signal is accurately discriminated into white signal W and black signal B by the threshold level TH.

However, when reading picture data of the line I indicated in Fig. 2 as explained above, a signal level difference between the black picture data $B_1'$ and white picture data $W_1$ becomes small, as indicated in Fig. 3(b), and it can no longer be read by the threshold level TH. In this case, picture quality to be transmitted is deteriorated.

The following measures have been taken in an effort to prevent deterioration of picture quality resulting from such cause.

(1) The read time required by image sensor 6 has been shortened, by irradiating a manuscript with a large amount of light.

(2) The manuscript is fed by a driving mechanism with a motor having a large torque, with a view to realizing high-speed manuscript feed. Thereby the time required for moving the manuscript is curtailed and picture data is read whilst the manuscript is stationary.

However, measure (1) requires the use of a specially designed lighting device in order to irradiate a manuscript with a large amount of light, and also the use of a specially designed power supply which is independent of that of the facsimile equipment itself, resulting in disadvantages in that the system becomes large in size and uneconomical. Moreover, with measure (2), driving by a motor is always accompanied by noise and an economic disadvantage. It is also inferior to the facsimile system.

Patent Abstracts of Japan, Vol. 4, No. 170 (E-35) (652), 22nd November 1980, and JP—A—55-118272, discloses a system for binarizing a picture signal in which a binary threshold level is changed in dependence upon the background level.

US—A—3 950 609 discloses a system in which a block is encoded to produce a first code when the block is all white, a second code when it is all black, and a third signal when the block is a mixture of black and white levels. The first and second codes are transmitted while the signal components of the block to which they relate are inhibited. The third signal is transmitted followed by the signal components of the block to which it relates.

US—A—4 160 279 discloses a system in which quantized picture signals are stored in memory, then asynchronously read out and subjected to data compression at a variable rate, that rate increasing in accordance with increases in the proportion of redundant white background areas. Scanning speed is controlled to correspond to data compression rate.

It is an object of the present invention to provide a system which economically reads picture data with simplified structure while a manuscript is being fed.

In order to attain such object, the present invention discloses a method of reading a picture signal from a manuscript.

In which a portion of the manuscript is scanned, to read a picture signal corresponding to one scanning line, in a main scanning direction, and the manuscript is fed in a subscanning direction, orthogonal to the main scanning direction, for presenting a next portion of the manuscript for scanning in the main scanning direction to read a picture signal corresponding to a next scanning line;

in which the picture signal corresponding to the one scanning line is discriminated into black and white level picture data by threshold detection with respect to a threshold reference level; and

in which the picture data corresponding to the one scanning line is divided into a preselected number of blocks and it is determined for each block whether black level picture data exists in that block;

characterised in that

if the number of blocks of the picture data corresponding to the one scanning line which includes black level picture is less than a predetermining number, the threshold reference level is shifted for discrimination into black or white levels of the picture signal corresponding to the next scanning line and reading of the picture signal for the next scanning line commences whilst the manuscript is being fed in the subscanning direction.

Brief decription of drawings

Fig. 1 is a block diagram of an existing facsimile equipment;

Fig. 2 is a schematic diagram for assistance in explaining main and sub-scannings;

Figs. 3(a) and (b) are for assistance in explaining the reading of picture data;

Fig. 4 is a block diagram of an embodiment of the present invention;

Fig. 5 illustrates in more detail an image sensor (CCD) of Fig. 4;

Fig. 6 illustrates in more detail the structure of a threshold level control circuit of Fig. 4;

Figs. 7(a) and (b) are time charts for assistance in explaining operations of Fig. 4 to Fig. 6, and

Figs. 8 and Figs. 9 are for assistance in explaining the present invention.

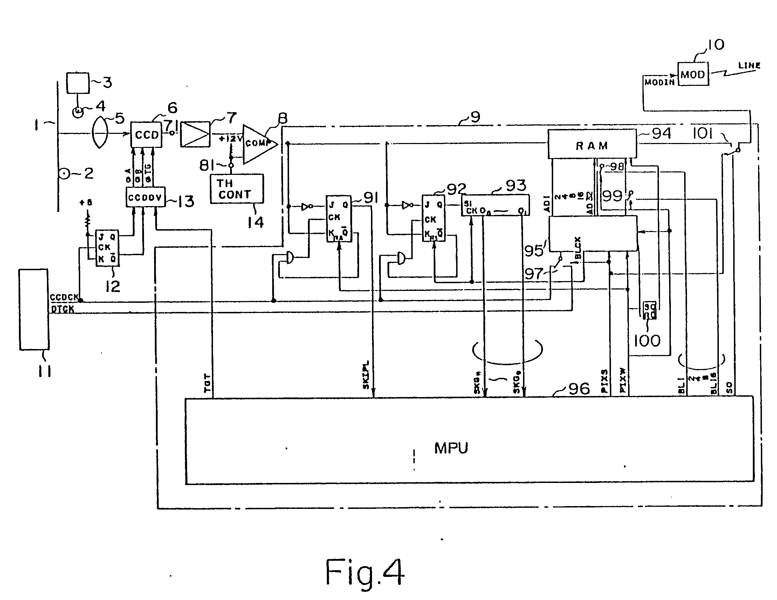

The structure and operation of a facsimile equipment embodying the present invention will be explained with reference to the block diagram of Fig. 4. In Fig. 4, 1 is a manuscript; 2 is a paper-feed roller; 4 is a light source having a power supply 3; 5 is a lens; 6 is an image sensor such as a CCD (Charge Coupled Device); 7 is an amplifier; 8 is a comparator; 9 is a picture signal processor; 10 is a modulator; 11 is a clock generator; 12 is a J—K flip-flop circuit (JK FF); 13 is a voltage converter; and 14 is a threshold level control circuit.

In the picture signal processor 9, 91 and 92 are JK flip-flop circuits (JK FF); 93 is a shift register; 94 is a random access memory (RAM); 95 is an address counter; 96 is a microcomputer (MPU); 97, 98, 99 and 101 are switch circuits; and 100 is a flip-flop circuit.

In Fig. 4, a manuscript 1 fed by the roller 2 is irradiated by light source 4 having power supply 3 and thereby image sensor 6 detects picture data via lens 5.

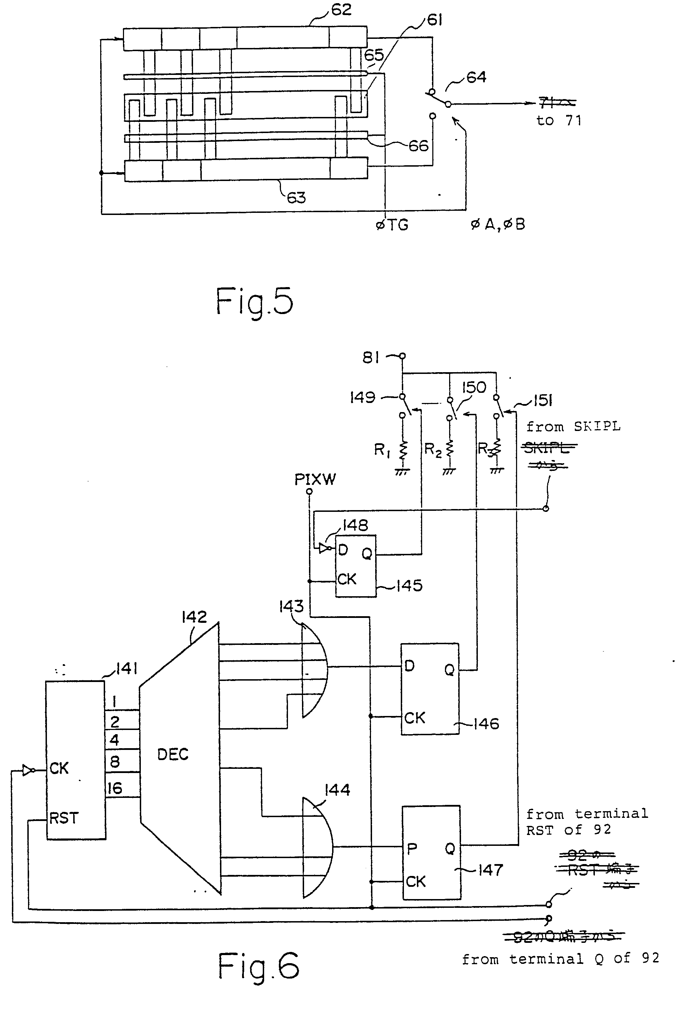

The structure of image sensor 6 employed (a CCD in this embodiment) is shown in Fig. 5.

Fig. 5, 61 is a photo-sensor; 62 and 63 are shift registers; 64 is a switch circuit; and 65 and 66 are transfer gates for transferring charges.

Picture data input to the photo-sensor 61 is converted, within a predetermined period, into the charges accumulated in accordance with the amount of light and then transferred to the shift registers 62, 63 in response to a clock $\phi_{TG}$ at predetermined timing as explained later. In this embodiment, the picture data in both shift registers 62, 63 can be counted up to 1216 bits of data in total. The charges transferred to the shift registers 62, 63 are sent to an input terminal 71 of amplifier 7 as the data for each shift register. At this time, transfer clocks $\phi_A$, $\phi_B$ (mutually inverted clocks, of opposite phases) connect the output terminals of shift registers 62, 63 alternately to the input terminal 71 of the amplifier 7 by driving switch circuit 64.

The signal thus sent to the amplifier 7 is amplified and input to the comparator 8. The comparator 8 compares the signal level sent from the amplifier 7 with a predetermined threshold level and outputs logic 1 as a "white" signal W when the input signal is higher than the threshold level and outputs logic 0 as a "black" signal B when the input signal is lower than said level, to the picture signal processor 9.

At this time, the threshold level given to the pertinant comparator 8 is controlled by the threshold level control circuit 14. The object of the present invention is attained by such threshold level control but this operation is explained in detail with reference to Fig. 6.

The picture signal processor 9, which receives the white signal W and black signal B respectively as logic 1 and logic 0, carries out the following operations.

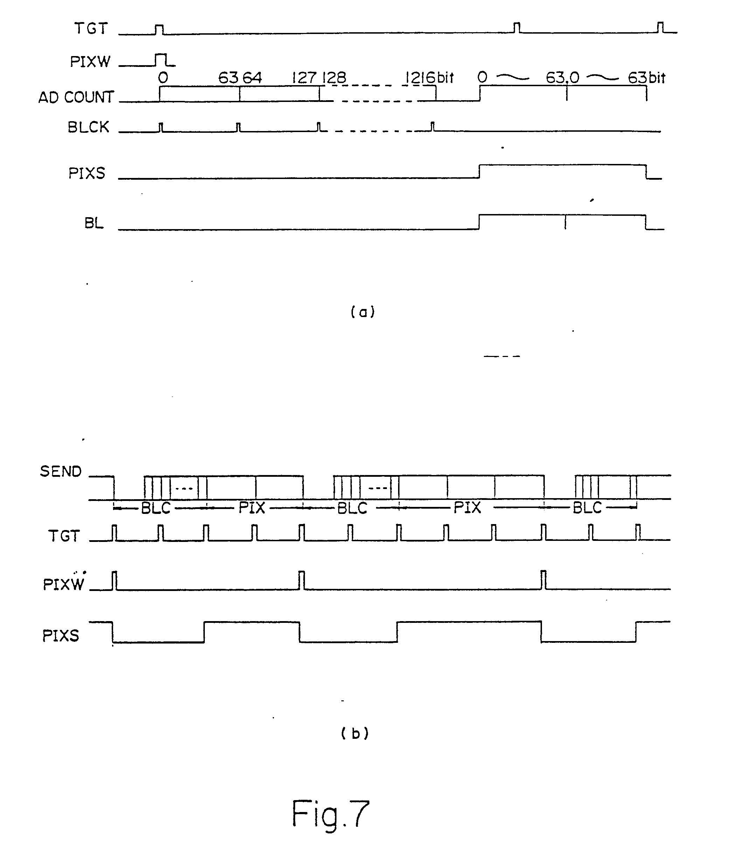

The micro-computer MPU 96 outputs a signal PIXW indicated in Fig. 7, instruction entry of the signal sent from the comparator 8 into the random access memory 94 via the flip-flop circuit 100. At this time, the signal PIXW is input to the address counter 95. Now, this address counter 95 starts counting in order to count 1216 bits of picture data output from the image sensor 6. This is indicated as AD COUNT in the time chart of Fig. 7(a). Upon completion of counting 1216 bits of picture data, the address counter 95 outputs the reset signal to the flip-flop 100. Thereby an output of flip-flop 100 is inverted and thus data entry to RAM 94 is completed.

On the other hand, an output of comparator 8 is also branched respectively to the J—K flip flops (JK—FF) 91 and 92. The JK—FF 91 has the function of detecting that a line is all white, namely has an "all white" line detecting function, while JK—FF 92 has the function of detecting in which blocks, among those obtained by dividing a line into the predetermined blocks, are all white, namely has an "all white" block detecting function.

First, the operation of JK—FF 91 will be explained. The signals sent from the comparator 8 are respectively input to the J, K terminals of JK—FF 91 as logic 1 and logic 0 signals. Since logic 1 represents a white signal W and logic 0 a black signal B, when the 1216 bits of picture data are all white signals W, an output of the output terminal Q of JK—FF 91 when the 1216 bits have all been input to the JK—FF 91 is logic 0. In case a black signal B exists, even a single bit, within the 1216 bits, an output of the output terminal Q when 1216 bits have all been input is logic 1. This is because, when even one black signal B bit exists, an output of Q terminal changes to 0 from 1 and the clock signal sent from the clock generator 11 and delivered to the JK—FF 91 via an AND gate which also receives the output of the Q terminal of JK—FF 91 disappears, thereby holding the inverted condition. Therefore, the MPU 96 discriminates whether a black signal B exists or not in the 1216 bits, by means of an output sent from the Q terminal of JK—FF 91. According to the result of discrimination, it is judged whether an all white skip signal should be generated or not, as explained later.

Next, operation of JK—FF 92 will be explained. In this embodiment, as explained previously, one line of 1216 bits is divided into blocks of predetermined number. In this embodiment, a line is divided into 19 blocks equally and each block is composed of 64 bits. Here, the JK—FF 91 sends a detected signal (output from its Q terminal) to the SKIPL terminal of MPU 96 after detecting whether every block is all white signal W or not and the MPU 96 generates the sending signal based on such data.

Operations of JK—FF 92 are generally similar to those of JK—FF 91. A signal input to the reset terminal of JK—FF 92 is a signal BLCK which is output every 64 bits from the address counter 95. On the other hand, a signal obtained every 1216 bits serves as the reset signal for JK—FF 91. Thus, a signal which detects whether or not an all white block exists for every 64 bits, namely for each block, is input to the shift register 93 and thereafter input to terminals SKGO to SKGn of MPU 96.

The MPU 96 generates a send signal on the basis of these signals and sends it to the modulator 10. Fig. 7(b) indicates the send signal SEND. In this Figure, the time axis is compressed as compared with that in Fig. 7(a).

The send signal SEND is composed of a signal BLC which indicates in which block among 19 blocks the black signal B exists and the signal PIX which indicates where black signals B exist amongst those blocks (64 bits) judged as including black signals B.

The signal BLC is composed of a heading dummy signal lasting several milliseconds, followed by an all white indication signal SKIPL which indicates whether one line, 1216 bits, are all "white" or not and signals BLO to BLn which indicate blocks including black signals B.

When the signal PIXW which instructs entry to RAM 94 is output from the MPU 96 in order to indicate data entry, the MPU 96 generates the send signal within the time where said dummy signal exists and the signal BLC is output from the MPU 96. At this time, the switch circuit 101 is connected to the terminal SO of MPU 96 in accordance with the signal PIXS.

When the signal PIX appears following the signal BLC, the switch circuit 101 is connected to the output side of RAM 94 in accordance with the signal PIXS and the signal PIX indicating existence of the black signal B is input to the modulator 10.

At this time, control is carried out as follows by the signal PIXW, signals BL1 to 16, and the switch circuits 98 and 99.

The MPU 96 discriminates blocks which are not all white blocks depending on the all white block data sent from the shift register 93, outputs the number from the BL1 to BL16 lines and simultaneously the PIXS signal, changes the clocks of address counter 95 to the send clock (DTCK), and moreover changes the data input signal (MODEM IN) of the modulator 10 to the RAM output by means of the switch circuit 97, and reads the picture signal of 64 bits of the block specified by BL1 to BL16 from the RAM output and then inputs it as the send data of the modulator 10. Similar operations are repeated for the number of times of blocks which are not all white blocks.

Upon completion of this operation, the same operation is repeated for successive lines.

The signal TGT in Fig. 7(b) instructs the image sensor 6 to accumulate charges for reading picture data. This signal causes the image sensor to discharge at a predetermined period, because if charges were accumulated continuously, the sensor would be charged up to levels indicating black signals B, resulting in discrimination errors for white signals W.

The clock generator 11 outputs the clock CCDCK (331 kHz in this embodiment) to be supplied to the system of image sensor 6 and the clock DTCK (7.8 kHz in this embodiment), to be supplied to the address counter. This clock is supplied to the address counter 95 through the changeover operation of switch circuit 97 depending on the signal PIXS sent from the MPU 96, for picture signal processing.

The JK—FF 12 is provided for generating the clocks $\phi_A$, $\phi_B$ to be supplied to the CCD used as the image sensor 6.

The voltage converter 13 converts the logic circuit voltage of 5V to the analog circuit voltage of 13V.

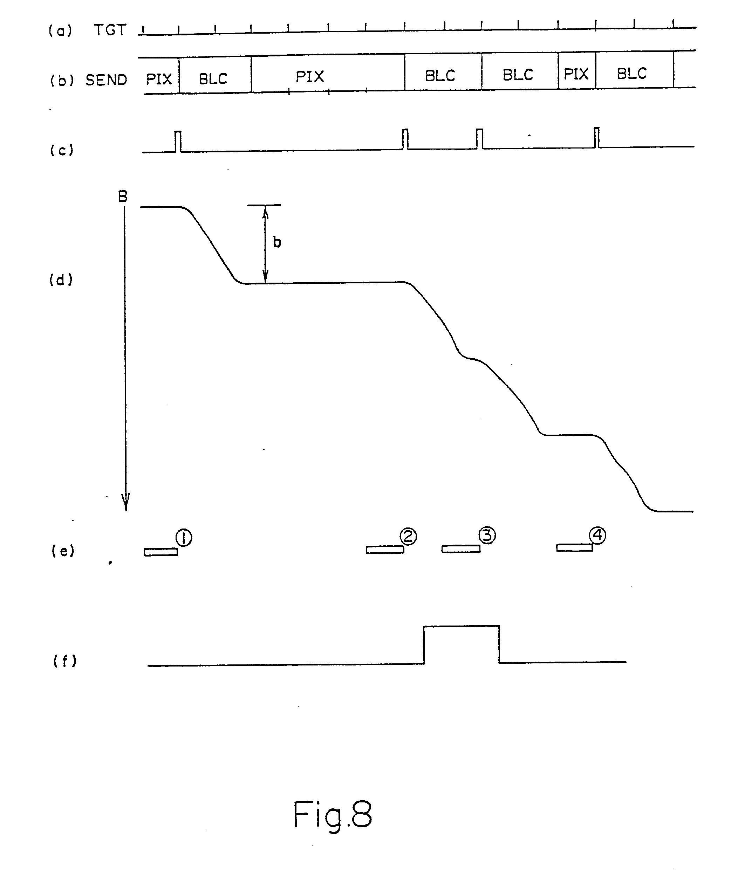

The relationship between paper feed in such facsimile equipment, namely subscanning, and the picture data read by the image sensor in the main scanning direction is explained with reference to Fig. 8.

In Fig. 8, (a) is the charge accumulation instruction signal TGT for the image sensor shown in Fig. 4, (b) is the send signal to be sent to the transmission path, (c) is the subscanning instruction signal which instructs start of subscanning to the motor, (d) is a shift line, indicating shifting of the manuscript, (e) indicates image sensor read time, (f) is a time chart indicating changes of threshold level.

In (d), B indicates the subscanning direction.

In Fig. 8, (a), (b) are respectively the same as the signals TGT and SEND in Fig. 7. The subscanning instruction signal (c) is generated in synchronization with the signal TGT simultaneously with start of the SEND signal. The manuscript is fed a fixed distance b from the point where the subscanning signal (c) is generated as indicated by the shift line in (d) and then stops. The read time (e) of the image sensor 6 exists only in the period of signal (a) just before generation of the subscanning instruction signal (c). In read times labelled ①, ②, ④ in (e), data is read with the manuscripts in the stationary condition, but in read time ③, data read is started while the manuscript is being shifted (subscanning). This is because the signal send processing time is curtailed since the preceding line is all white.

In such a case, discrimination error of the white picture signal W and the black picture signal B may be probable as explained with reference to Fig. 3.

In the case of the present invention, the threshold level for discriminating the white signal W and the black signal B is changed in order to prevent such discrimination error. A change of threshold level is shown in Fig. 8(f). Namely, in such a case, it is required to bring the threshold level close to the level of white picture data, since the occupation rate of black picture data per unit area is reduced.

The control circuit for this purpose is shown in Fig. 6. This Figure indicates the structure of threshold level control circuit 14 in an embodiment of the present invention shown in Fig. 4.

In this Figure, 141 is a counter; 142 is a decoder; 143, 144 are OR circuits; 145, 146, 147 are flip-flop circuits; 148 is the invertor; 149, 150 and 151 are switch circuits; $R_1$, $R_2$, $R_3$ are resistors.

The counter 141 receives the signal sent from the terminal Q of JK—FF 92 at a clock terminal CK, and it also receives the signal sent from the reset terminal RST of JK—FF 92 at its reset terminal RST. Since JK—FF 92 outputs logic 1 for each all white block from its Q output terminal, the number of blocks which are not all white can be counted by inputting such logic 1 signal, after it is inverted by the invertor, to the counter 141. Signals from counter 141 are input to OR circuits 143, 144 via decoder 142 and from that decoder respectively input to terminals D of the flip-flop circuits 146, 147.

The flip-flop 145 receives the signal SKIPL at its terminal D, via invertor 148. The signal PIXW is input to the clock terminals CK of each of flip-flop circuits 145, 146 and 147.

Thereby, in cases in which the numbers of blocks which are not all white are insufficient, an output signal appears from the flip-flop 145 when the number of not all white blocks is within a predetermined range, or from the flip-flop 147 when that number is within another predetermined range, turning the switch circuits 149, 150 and 151 respectively. At this time, the voltage to be input to the input terminal 81 of the comparator 8 is changed in accordance with different resistance values of $R_1$, $R_2$ and $R_3$. Thereby, the reference voltage of comparator 8 can be controlled in accordance with the number of blocks which are not all white.

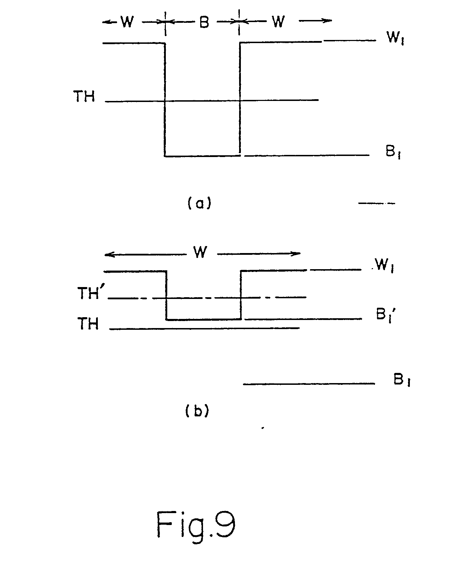

Such control is effective for controlling the threshold level of the comparator 8 corresponding to the processing time of the SEND signal. This process is explained with reference to Figs. 9(a) and (b).

Usually, as shown in Fig. 9(a), the white signal W and the black signal B are discriminated using a specified threshold level TH. However, in a case in which the SEND signal is not sufficient in amplitude, as in the case of transmission of picture data of an all white line, the threshold level is shifted to TH' from TH through control as shown in Fig. 9(b). Such control is performed by the threshold level control circuit shown in Fig. 6. Thereby, misreading of picture data can be prevented and picture data can be transmitted without any deterioration of quality.

## Claims

1. A method of reading a picture signal from a manuscript,

in which a portion of the manuscript is scanned, to read a picture signal corresponding to one scanning line, in a main scanning direction, and the manuscript is fed in a subscanning direction, orthogonal to the main scanning direction, for presenting a next portion of the manuscript for scanning in the main scanning direction to read a picture signal corresponding to a next scanning line;

in which the picture signal corresponding to the one scanning line is discriminated into black and white level picture data by threshold detection with respect to a threshold reference level; and

in which the picture data corresponding to the one scanning line is divided into a preselected number of blocks and it is determined for each block whether black level picture data exists in that block; characterised in that

if the number of blocks of the picture data corresponding to the one scanning line which includes black level picture data is less than a predetermined number, the threshold reference level is shifted for discrimination into black or white levels of the picture signal corresponding to the next scanning line and reading of the picture signal for the next scanning line commences whilst the manuscript is being fed in the subscanning direction.

2. A method as claimed in claim 1, wherein the number of blocks of the picture data corresponding to the one scanning line which include black level picture data are counted, and, in dependence upon the count result, switching circuits are operated to connect resistors having different resistance values, to provide different threshold reference levels in dependence upon the count result.

## Patentansprüche

1. Verfahren zum Lesen eines Bildsignals von einem Manuskript,

bei dem ein Abschnitt des Manuskriptes in einer Hauptabtastrichtung abgetastet wird, um ein Bildsignal zu lesen, welches einer Abtastzeile entspricht, und das Manuskript in einer Unter-Abtastrichtung transportiert wird, senkrecht zur Hauptabtastrichtung, um einen nächsten Abschnitt des Manuskriptes zum Abtasten in der Hauptabtastrichtung zu präsentieren, um ein Bildsignal zu lesen, welches einer nächsten Abtastzeile entspricht;

bei dem das Bildsignal, welches der einen Abtastzeile entspricht, durch Schwellenwertdetektion in Bezug auf einen Schwellenreferenzpegel in schwarze und weiße Pegelbilddaten diskriminiert wird; und

bei dem die Bilddaten, die der einen Abtastzeile entsprechen, in eine vorausgewählte Anzahl von Blöcken geteilt werden und für jeden Block festgelegt wird, ob schwarze Pegelbilddaten in jenem Block existieren; dadurch gekennzeichnet, daß

falls die Zahl der Blöcke der Bilddaten, die der einen Abtastzeile entsprechen, welche schwarze Pegelbilddaten enthält, kleiner als eine vorbestimmte Anzahl ist, der Schwellenwertreferenzpegel verschoben wird, zur Diskriminierung in schwarze oder weiße Pegel des Bildsignals, welches der nächsten Abtastzeile entspricht, und das Lesen des Bildsignals für die nächste Antastzeile beginnt, während das Manuskript in der Unterabtastrichtung geführt wird.

2. Verfahren nach Anspruch 1, bei dem die Zahl der Blöcke der Bilddaten, die der einen Abtastzeile entsprechen, welche schwarze Pegelbilddaten hat, gezählt werden, und in Abhängigkeit von dem Zählergebnis, Schaltkreise betätigt werden, um Widerstände anzuschließen, die verschiedene Widerstandswerte haben, um verschiedene Schwellenwertreferenzpegel in Abhängigkeit von dem Zählergebnis zur Verfügung zu stellen.

## Revendications

1. Procédé de lecture d'un signal vidéo à partir d'un manuscrit,

dans lequel une partie du manuscrit est balayée, pour lire un signal vidéo correspondant à une ligne de balayage, dans une direction de balayage principal, et le manuscrit est avancé dans une direction de sous-balayage, perpendiculairement à la direction de balayage principal, pour présenter une partie suivante du manuscrit pour un balayage dans la direction de balayage principal afin de lire un signal vidéo correspondant à une ligne de balayage suivante;

dans lequel le signal vidéo correspondant à une ligne de balayage est discriminé en données vidéo de niveau de noir et de niveau de blanc par une détection de seuil par rapport à un niveau de seuil de référence;

et dans lequel les données vidéo correspondant à la ligne de balayage sont divisée en un nombre présélectionné de blocs et il est déterminé pour chaque bloc si des données vidéo de niveau de noir sont présentes dans ce block; caractérisé en ce que

si le nombre du blocs des données vidéo correspondant à la ligne de balayage qui inclut des données vidéo de niveau de noir est inférieur à un nombre prédéterminé, le niveau de seuil de référence est décalé pour une discrimination dans des niveaux de noir ou de blanc signal vidéo correspondant à la ligne de balayage suivant et la lecture du signal vidéo pour la ligne de balayage suivante commence alors que le manuscrit est avancé dans la direction de sous-balayage.

2. Procédé selon la revendication 1, dans lequel le nombre de blocs des données vidéo correspondant à la ligne de balayage qui incluent des données vidéo de niveau de noir sont comptés, et, selon le résultat de compte, des circuits commutateurs sont mis en fonctionnement pour connecter des résistances ayant différentes valeurs de résistance, pour fournir différents niveau de seuil de référence selon le résultat de compte.

**0 064 557**

Fig. 1

Fig.2

1

(a)

(b)

Fig.3

Fig.4

Fig.5

Fig.6

(a)

(b)

Fig.7

Fig.8

(a)

(b)

Fig.9